# EUROPEAN PATENT SPECIFICATION

(11) **EP 1 907 744 B1**
(45) Date of publication and mention of the grant of the patent: **17.12.2008**
(21) Application number: 05757639.9
(22) Date of filing: 03.07.2005
(51) Int. Cl.: F16L 37/084

(54) **COUPLING BETWEEN TWO TUBES WITH SEPARATE SET-UP CLAMPS**
KUPPLUNG ZWISCHEN ZWEI ROHREN MIT GETRENNTEN EINSTELLKLEMMEN
ACCOUPLEMENT ENTRE DEUX TUBES AVEC PINCES DE RÉGLAGE SÉPARÉES

(43) Date of publication of application: 09.04.2008
(73) Proprietor: Widee B.V., 7775 AC Lutten (NL)
(72) Inventor: DE WILDE, Gerrit, Jan, NL-7788 AH Anerveen (NL)
(74) Representative: Schumann, Bernard Herman Johan
(86) International application number: PCT/NL2005/000473
(87) International publication number: WO 2007/004862

(56) References cited:
- EP-A- 0 829 671
- EP-A- 1 006 307
- US-A- 5 580 099

## Description

The invention relates to a coupling between a first body with a hole, for instance a cylindrical hole with an axis, and a cylindrical end zone of a for instance tubular second body to be arranged therein or therearound in an axial direction, in which hole extend a number of elastically deformable tongues which are connected to the relevant body and ordered at mutual angular distances, the free end edges of which tongues lie substantially on the peripheral plane of an imaginary, substantially rotation-symmetrical body, the diameter of which is smaller than the outer diameter of the end zone of the second body, which tongues extend at an angle to the axial direction such that, when said end zone is inserted, they bend elastically in the insertion direction and scrape over the surface thereof with their free edges such that after insertion of the end zone over some distance the movement in backward direction relative to the insertion direction is blocked.

Such a coupling is known from US 5 580099 EP-A-0 378 035, EP-A-0 212 883, EP-A-0 579 194, EP-A-0 294 948, EP-A-0 972 981 and DE-A-197 23 594. Relative to this stated prior art it is an object of the invention to embody a coupling between two bodies such that it can be released very easily without specific uncoupling operations and the use of tools intended specifically for this purpose, while in the coupled situation the bodies are nevertheless coupled to each other very firmly and even, ostensibly, inseparably.

These and other objects are realized with a coupling of the type specified in the preamble which has the feature that each tongue forms part of a generally U-shaped clip fixable clampingly over the mouth rim of the first body, and that the end edges of the tongues have an inclining position corresponding to a part of a helix, as a consequence of which, when the second body is rotated around the axis relative to the first body, the form of said helix is followed so that an axial relative movement also occurs and said end zone of the second body can be removed from the first body.

The tongues can extend on the inner side of the hole but, alternatively, can also be situated on the surface of said end zone. It is recommended for safety reasons when the coupling is effected that the tongues are situated inside the hole, since there is otherwise the danger of the person effecting the coupling being injured by the possibly sharp tongues.

The clips can consist of any suitable material. A sufficiently strong plastic such as for instance ABS is therefore suitable. Cheaper and very reliable is an embodiment where the tongues consist of metal, in particular steel.

According to another aspect of the invention, the coupling according to the invention has the special feature that each tongue has a main direction in axial projection which differs from the radial direction and is in a direction opposite the direction of rotation when the end zone of the second body is moved outward. A more or less radially directed additional force is hereby exerted on each tongue during rotation of the cylindrical end zone of the second body, whereby the ring has a slight tendency to expand, which somewhat facilitates the helical rotation.

In a specific embodiment, the coupling according to the invention has the special feature that the first body has an axial stop for bounding the distance over which said end zone of the second body can be inserted into the hole. Using this embodiment the coupling can be effected in very simple manner by inserting the cylindrical end zone of the second body with some axial force into the cylindrical hole in the first body, wherein the axial insertion distance is determined by said axial stop. This axial stop can for instance be embodied as an annular shoulder, against which the leading side of the end zone of the second body comes to lie.

According to yet another aspect of the invention, the coupling can have the special feature that at least said end zone of the second body consists of plastic, concrete, wood or metal, such as iron, copper or aluminium. It is important that the material of the tongues is chosen such that it can co-act effectively in the above described manner with the material of the - second body.

In order to prevent unintended displacement of each clip in the situation where the bodies must be separated from each other by relative rotation, use can be made of means preventing such a rotation. The coupling can have for this purpose the special feature that each clip has at least one protrusion which during mutual rotation of the two bodies in the stated manner braces itself against the material of the body to which the ring is connected. A clip can also be fixed with glue and/or be received more or less close-fittingly in a recess.

A coupling according to the invention can for instance be applied for the coupling of two tubes. A two-sided coupling sleeve can thus for instance be coupled at both its ends to respective tubes by means of two associated couplings according to the invention. Such a sleeve can optionally be an outer sleeve or an inner sleeve. In the case of an outer sleeve, the connection between the tubes for coupling to each other can be realized such that these tubes come to rest with their free end edges against each other. A completely medium-tight sealing can further be ensured by making use of suitable sealing means, for instance sealing rings present on the inner surface of the outer sleeve.

What is important is that an established coupling cannot be released by exerting only an axial tensile force on the two bodies. The connection by means of the coupling according to the invention can only be released by mutually rotating the bodies in the above described manner.

The invention also relates to a clip which is adapted to form part of a coupling of the above specified type, which clip has a general U-shape and can be fixed clampingly over the mouth rim of the tubular first body, and has a protruding, elastically deformable tongue, the free end edge of which has an inclining position relative to the direction of arrangement of the clip.

The invention will now be elucidated on the basis of the accompanying drawings.

In the drawing:
Fig. 1 shows a perspective view of a coupling between two tubes according to the invention at a stage where the tubes to be mutually coupled still lie a distance apart;
Fig. 2 shows the detail II of Fig. 1 on larger scale; and

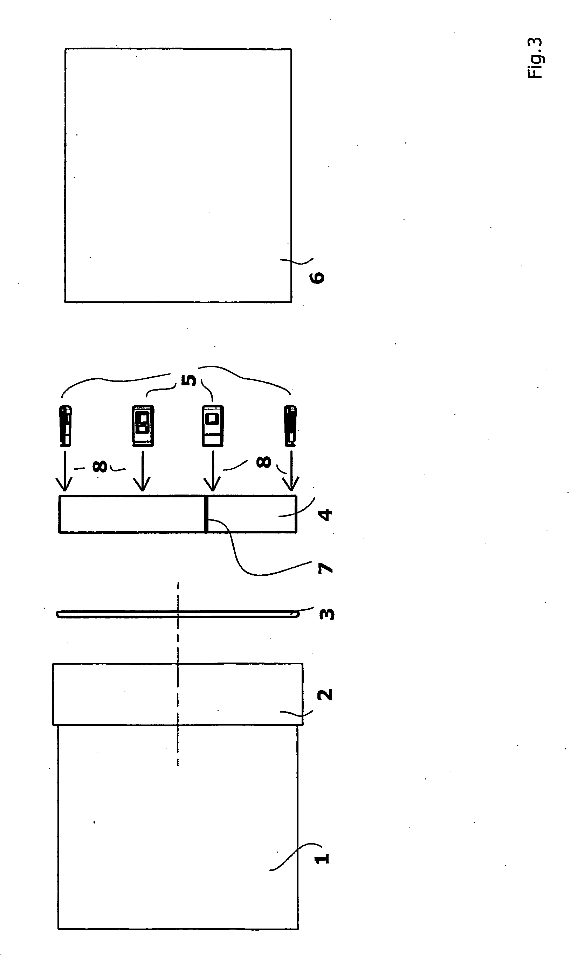

Fig. 3 shows a side view corresponding to the perspective view of Fig. 1.

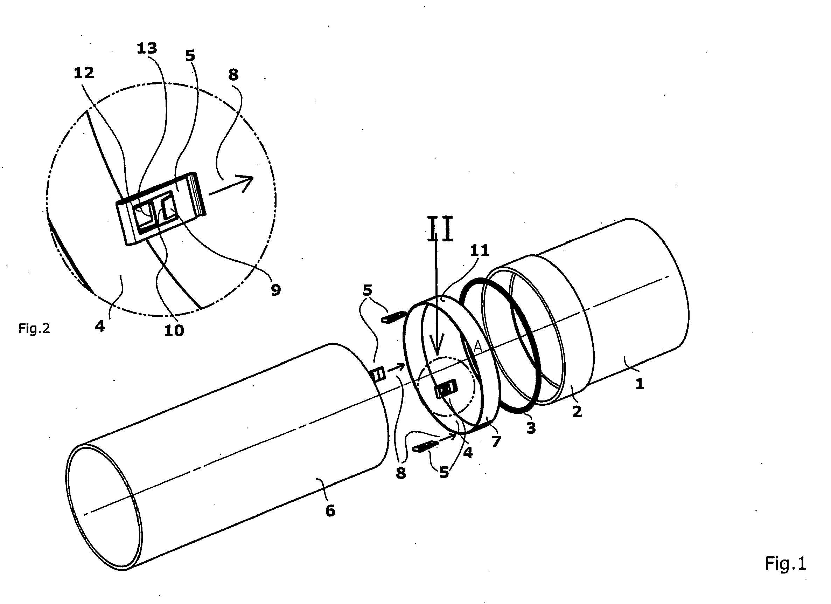

Fig. 1 and show in the manner of an exploded view a coupling according to the invention between a first tube 1 and a second tube 6. The first tube 1 has a widened end zone 2 into which fits a sealing ring 3.

A cylindrical mounting ring 4 further fits into the widened end zone 2. In this embodiment this mounting ring 4 is provided with an interruption or incision 7 which ensures that ring 4 fits into the widened end zone 2 with some play and resiliently.

Although not strictly necessary, this aspect may be important in some circumstances in respect of the basic principle of the invention, according to which use is made of a number of generally U-shaped clips 5 with cutting tongues. In this embodiment these clips 5 are not placed directly over the mouth rim of the first tube but are arranged clampingly over mounting ring 4. Arrows 8 indicate the direction in which clips 5 are arranged on mounting ring 4.

Fig. 2 shows that each clip 5 has on its outer side (in the situation in which the clip 5 is placed on mounting rim 4) a scraping tongue 9 directed obliquely inward. The end edge 10 thereof scrapes over the outer surface 11 of mounting ring 4 when clip 5 is arranged. A backward movement is thus blocked effectively. Any other movement is also blocked after clip 5 has been pressed on fixedly, this being important for reasons to be described below.

Situated on the inner side is an inward extending cutting tongue 12 with an end edge 13 having an inclining position corresponding to a part of a helix. This inclining position is important for reasons to be described below. The inclining position of end edges 13 of all tongues is the same.

Once tongues 5 have been arranged with force over mounting ring 4 in the shown manner, the mounting ring is placed in the widened end zone 2 and pressed on with some force. Sealing ring 3 is hereby accommodated therein. It does however continue to protrude to the extent that it can fulfil its sealing function to be described below.

After the first tube has been provided in the above described manner with O-ring 3 and mounting ring 4 with clips 5, this thus formed unit is ready for coupling to the second tube 6. This has a diameter such that it can pass end edges 13 of cutting tongues 12 with some force and with elastic deformation thereof. In order to ensure a good sealing between first tube 1 and second tube 6 the insertion displacement is continued until mouth rim 14 co-acts sealingly under some pressure with sealing ring 3, which on its other side co-acts sealingly under pressure with the step-like transition between first tube 1 and the widened end zone 2 thereof.

The now effected coupling cannot be released by exerting a relative backward displacement of second tube 6. According to the invention however, it is still possible to remove the second tube. For this purpose it can be rotated relative to first tube 1. The helical form defined by end edges 13 of cutting tongues 12 is thereby followed such that second tube 6 also executes a relative axial movement, and can thus be removed in the manner of a screw from first tube 1, 2, mounting ring 4 and cutting tongues 12.

A more or less tangential force is exerted on each of the cutting tongues 12 by this rotating movement. Owing to the above mentioned presence of scraping tongues 9 the clips 5 are not able to perform any movement as a result of this tangential force. The clips are therefore fixed firmly in their position.

During insertion and unscrewing of second tube 6 it is not possible to avoid the outer surface thereof respectively displaying scratch-marks and a set of helical scores. These plastic deformations will however be relatively superficial and not affect proper operation of the coupling between tubes 1 and 6.

Clips 5 could also be arranged directly on tube 1. This tube 1 would in that case not have to have a widened end part. The drawback of such a coupling is that the clips are visible on the outside and accessible. This is not very attractive either visually or technically. In the drawn and described exemplary embodiment the clips are wholly accommodated in the widened end zone. This is an attractive option both visually and technically.

Attention is drawn to the fact that in the case of tubes with differing diameters the clips 5 could be arranged on the tube with the smaller diameter such that the cutting tongues are situated on the outside instead of on the inside as in the drawn and described exemplary embodiment. The second tube is not then inserted but arranged over the first tube and the clips 5.

Diverse modifications in components of the coupling according to the invention and their mutual connection are thus possible without departing from the scope of the invention.

## Claims

1. Coupling between a first body with a hole (1), for instance a cylindrical hole with an axis, and a cylindrical end zone of a for instance tubular second body (6) to be arranged therein or therearound in an axial direction, in which hole extend a number of elastically deformable tongues (9) which are connected to the relevant body and ordered at mutual angular distances, the free end edges (10) of which tongues lie substantially on the peripheral plane of an imaginary, substantially rotation-symmetrical body, the diameter of which is smaller than the outer diameter of the end zone of the second body, which tongues extend at an angle to the axial direction such that, when said end zone is inserted, they bend in the insertion direction and scrape over the surface (11) thereof with their free edges such that after insertion of the end zone over some distance the movement in backward direction relative to the insertion direction is blocked,
**characterized in that**
each tongue forms part of a generally U-shaped clip (5) fixable clampingly over the mouth rim of the first body, and that
the end edges (10) of the tongues (9) have an inclining position corresponding to a part of a helix, as a consequence of which, when the second body is rotated around the axis relative to the first body, the form of said helix is followed so that an axial relative movement also occurs and said end zone of the second body can be removed from the first body.

2. Coupling as claimed in claim 1, wherein each clip (5) consists of metal, in particular steel.

3. Coupling as claimed in any of the foregoing claims, wherein each tongue has a main direction in axial projection which differs from the radial direction and is in a direction opposite the direction of rotation when the end zone of the second body is moved outward.

4. Coupling as claimed in any of the foregoing - claims, wherein the first body has an axial stop for bounding the distance over which said end zone of the second body can be displaced relative to the first body during arranging.

5. Coupling as claimed in any of the foregoing claims, wherein at least said end zone of the second body consists of plastic, concrete, wood or metal, such as iron, copper or aluminium.

6. Coupling as claimed in any of the foregoing claims, wherein each clip comprises means which prevent displacement of the clip during rotation of the second body relative to the first body.

7. Coupling as claimed in claim 6, wherein each clip has at least one protrusion which during mutual rotation of the two bodies in the stated manner braces itself against the material of the body to which the ring is connected.

8. Clip (5) adapted to form part of a coupling as claimed in any of the foregoing claims, which clip has a general U-shape and can be fixed clampingly over the mouth rim of the tubular first body (1), and has a protruding, elastically deformable tongue (9), the free end edgs (10) of which has an inclining position relative to the direction of arrangement of the clip.

## Patentansprüche

1. Kupplung zwischen einem ersten Körper mit einer Bohrung (1), beispielsweise einer zylindrischen Bohrung mit einer Achse, und einem zylindrischen Endbereich eines beispielsweise rohrförmigen zweiten Körpers (6), der darin oder da herum in axialer Richtung angeordnet werden soll, in welcher Bohrung eine Anzahl elastisch verformbarer Zungen (9) hineinragen, die mit dem entsprechenden Körper verbunden und in Winkelabständen zueinander angeordnet sind, die Kanten (10) von besagten Zungen liegen an ihren freien Enden im Wesentlichen auf der Umfangsebene eines imaginären, im Wesentlichen rotationssymmetrischen Körpers, wovon der Durchmesser kleiner ist als der Außendurchmesser des Endbereichs des zweiten Körpers, welche Zungen sich in einem Winkel zu der axialen Richtung auf eine Weise erstrecken, dass wenn der besagte Endbereich eingeführt wird, sie in der Einführrichtung verbiegen und über die Oberfläche (11) davon mit ihren freien Kanten schaben, sodass nach dem Einführen des Endbereichs über einen bestimmten Abstand die Bewegung in rückwärtiger Richtung relativ zu der Einführrichtung blockiert ist,
**dadurch gekennzeichnet, dass** jede Zunge Teil einer hauptsächlich U-förmigen Klammer (5) ist, die fixierbar über dem Öffnungsrand des ersten Körpers klemmt, und dass
die Endkanten (10) der Zungen (9) eine geneigte Position haben, entsprechend einem Teil einer Spirale, mit der Folge, dass, wenn der zweite Körper relativ zum ersten Körper um seine Achse gedreht wird, der Form dieser Spirale gefolgt wird, sodass eine relative axiale Bewegung ebenfalls eintritt und besagter Endbereich des zweiten Körpers von dem ersten Körper entfernt werden kann.

2. Kupplung nach Anspruch 1, worin jede Klammer (5) aus Metall besteht, im Besonderen aus Stahl.

3. Kupplung nach einem der vorhergehenden Ansprüche, worin jede Zunge in der axialen Projektion eine Hauptrichtung hat, die sich von der radialen Richtung unterscheidet und in einer Richtung entgegengesetzt zur Drehrichtung liegt, wenn der Endbereich des zweiten Körpers nach außen bewegt wird.

4. Kupplung nach einem der vorhergehenden Ansprüche, worin der erste Körper einen axialen Anschlag hat zur Begrenzung des Abstands, über den besagter Endbereich des zweiten Körpers relativ zum ersten Körper während der Durchführung verschoben werden kann.

5. Kupplung nach einem der vorhergehenden Ansprüche, worin zumindest besagter Endbereich des zweiten Körpers aus Kunststoff, Beton, Holz oder Metall, wie Eisen, Kupfer oder Aluminium besteht.

6. Kupplung nach einem der vorhergehenden Ansprüche, worin jede Klammer Mittel umfasst, die eine Verschiebung der Klammer während einer Drehung des zweiten Körpers relativ zum ersten Körper verhindern.

7. Kupplung nach Anspruch 6, worin jede Klammer mindestens einen Vorsprung hat, der während der gemeinsamen Drehung der beiden Körper in der angegebenen Art und Weise sich gegen den Werkstoff des Körpers, mit dem der Ring verbunden ist, verspannt.

8. Klammer (5), die ausgelegt ist, nach einem der vorhergehenden Ansprüche einen Teil einer Kupplung zu bilden, welche Klammer generell eine U-Form hat und klemmend über dem Öffnungsrand des rohrförmigen ersten Körpers (1) festgesetzt werden kann, und eine vorstehende, elastisch verformbare Zunge (9) hat, wovon die Kante am freien Ende (10) eine geneigte Position relativ zur Richtung der Anordnung der Klammer hat.

## Revendications

1. Couplage entre un premier corps comportant un trou (1), par exemple un trou cylindrique ayant un axe, et une zone d'extrémité cylindrique d'un second corps (6), tubulaire par exemple, à agencer à l'intérieur ou autour du premier dans une direction axiale, trou dans lequel s'étendent un certain nombre de languettes (9) élastiquement déformables qui sont attachées au corps pertinent et disposées à des distances angulaires mutuelles, le bord (10) de l'extrémité libre desdites languettes se trouvant sensiblement dans le plan périphérique d'un corps imaginaire, sensiblement à symétrie de révolution, dont le diamètre est plus petit que le diamètre extérieur de la zone d'extrémité du second corps, lesquelles languettes font un angle par rapport à la direction axiale tel que, quand ladite zone d'extrémité est insérée, elles se plient dans le sens de l'insertion et en raclent la surface (11) avec leur bord libre de telle sorte que, après insertion de la zone d'extrémité sur une certaine distance, le mouvement en sens inverse par rapport au sens d'insertion est bloqué,
**caractérisé en ce que**
chaque languette fait partie d'une attache (5) globalement en forme de U, fixable par serrage sur le rebord de l'ouverture du premier corps, et **en ce que**
les bords d'extrémité (10) des languettes (9) ont une position d'inclinaison correspondant à une partie d'une hélice, en conséquence de quoi, quand on fait tourner le second corps autour de l'axe par rapport au premier corps, la forme de ladite hélice est suivie de telle sorte qu'un mouvement relatif axial se produit également et que ladite zone d'extrémité du second corps peut être retirée du premier corps.

2. Couplage selon la revendication 1, dans lequel chaque attache (5) est constituée de métal, en particulier d'acier.

3. Couplage selon l'une quelconque des revendications précédentes, dans lequel chaque languette a une direction principale en projection axiale qui diffère de la direction radiale et est de sens opposé au sens de rotation quand la zone d'extrémité du second corps est déplacée vers l'extérieur.

4. Couplage selon l'une quelconque des revendications précédentes, dans lequel le premier corps comporte une butée axiale pour limiter la distance sur laquelle ladite zone d'extrémité du second corps peut être déplacée par rapport au premier corps pendant l'agencement.

5. Couplage selon l'une quelconque des revendications précédentes, dans lequel au moins ladite zone d'extrémité du second corps est constituée de plastique, de béton, de bois ou d'un métal tel que le fer, le cuivre ou l'aluminium.

6. Couplage selon l'une quelconque des revendications précédentes, dans lequel chaque attache comprend des moyens qui empêchent le déplacement de l'attache pendant la rotation du second corps par rapport au premier corps.

7. Couplage selon la revendication 6, dans lequel chaque attache comporte au moins une saillie qui, pendant la rotation mutuelle des deux corps de la manière indiquée, se raidit contre le matériau du corps auquel l'anneau est relié.

8. Attache (5) adaptée pour faire partie d'un couplage selon l'une quelconque des revendications précédentes, laquelle attache a une forme globale en U et peut être fixée par serrage sur le rebord de l'ouverture du premier corps (1) tubulaire, et comporte une languette (9) saillante, élastiquement déformable, dont le bord (10) de l'extrémité libre a une position d'inclinaison par rapport au sens d'agencement de l'attache.
